# EUROPÄISCHE PATENTSCHRIFT

(11) **EP 1 371 185 B1**
(45) Veröffentlichungstag und Bekanntmachung des Hinweises auf die Patenterteilung: **23.11.2005**
(21) Anmeldenummer: 02726059.5
(22) Anmeldetag: 11.03.2002
(51) Int. Cl.: H04L 12/44

(54) **VERFAHREN UND ELEKTRONISCHER SCHALTKREIS FÜR EINE SKALIERBARE KOMMUNIKATIONSSCHNITTSTELLE IN AUTOMATISIERUNGSKOMPONENTEN**
METHOD AND ELECTRONIC SWITCHING CIRCUIT FOR A SCALABLE COMMUNICATION INTERFACE IN AUTOMATION COMPONENTS
PROCEDE ET CIRCUIT ELECTRONIQUE POUR INTERFACE DE COMMUNICATION A ECHELLE VARIABLE DANS DES COMPOSANTS D'AUTOMATISATION

(30) Priorität: 22.03.2001 DE 10114389; 26.09.2001 DE 10147432
(43) Veröffentlichungstag der Anmeldung: 17.12.2003
(73) Patentinhaber: SIEMENS AKTIENGESELLSCHAFT, 80333 München (DE)
(72) Erfinder: FRANKE, Michael, 91056 Erlangen (DE); KIESEL, Martin, 91099 Poxdorf (DE)
(86) Internationale Anmeldenummer: PCT/DE2002/000852
(87) Internationale Veröffentlichungsnummer: WO 2002/078264

(56) Entgegenhaltungen:
- US-A- 4 639 910
- MUELLER R: "LON - DAS UNIVERSELLE NETZWERK TEIL 1. \EIN NEUARTIGES KONZEPT, UM STEUERGERAETE, SENSOREN UND AKTOREN MITEINANDER SPRECHEN ZU LASSEN" ELEKTRONIK, FRANZIS VERLAG GMBH. MUNCHEN, DE, Bd. 40, Nr. 22, 29. Oktober 1991 (1991-10-29), Seiten 59-62,64-65,, XP000268228 ISSN: 0013-5658

## Beschreibung

Die Erfindung betrifft ein Verfahren und einen elektronischen Schaltkreis für die Herstellung einer Kommunikationsschnittstelle, insbesondere in einem Automatisierungssystem.

Aus dem Stand der Technik sind verschiedene Verfahren und Systeme zur Herstellung von Kommunikationsverbindungen zwischen den Teilnehmern eines Datennetzes bekannt. Weit verbreitet sind Bussysteme, bei denen jeder Teilnehmer jeden anderen Teilnehmer des Datennetzes direkt über das Bussystem adressieren kann. Ferner sind schaltbare Datennetze bekannt, bei denen so genannte Punkt-zu-Punkt-Verbindungen hergestellt werden, das heißt, ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, das heißt die Daten werden zu einem oder mehreren Paketen zusammengepackt und in dieser Form über das Datennetz an den entsprechenden Empfänger gesendet. Man spricht deshalb auch von Datenpaketen. Der Begriff Übertragung von Daten wird dabei im Weiteren synonym zur oben erwähnten Übertragung von Datentelegrammen oder Datenpaketen verwendet.

Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt.

Ebenso ist an sich aus dem Stand der Technik bekannt in einem solchen Automatisierungssystem ein synchrones getaktetes Kommunikationssystem mit Äquidistanz-Eigenschaften zu verwenden. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind.

Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, z. B. speicherprogrammierbare Steuerungen (-SPS, Bewegungssteuerungen-) oder andere Kontrolleinheiten, Computer, oder Maschinen, die elektronische Daten mit anderen Maschinen austauschen, insbesondere Daten von anderen Maschinen verarbeiten, und Peripheriegeräte wie z.B. Ein-/ Ausgabe-Baugruppen, Antriebe, Aktoren, Sensoren. Unter Kontrolleinheiten werden im folgenden Regler- oder Steuerungseinheiten jeglicher Art verstanden. Zur Datenübertragung werden beispielsweise Kommunikationssysteme wie z.B. Feldbus, Profibus, Ethernet, Industrial Ethernet, FireWire oder auch PC-interne Bussysteme (PCI), etc. verwendet.

Automatisierungskomponenten (z.B. Steuerungen, Antriebe,...) verfügen heute oftmals über eine Schnittstelle zu einem zyklisch getakteten Kommunikationssystem. Eine Ablaufebene der Automatisierungskomponente (Fast-cycle) (z.B. Lageregelung in einer Steuerung, Drehzahl- und Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke und an die Kommunikationsanschaltung der Komponenten.

Aus dem Stand der Technik bekannte Systemkomponenten nutzen zur Kommunikation für jede Prozess- bzw. Automatisierungsebene meist nur ein zyklisch getaktetes Kommunikationssystem bzw. einen Kommunikationszyklus (Fast-cycle) in dessen Takt alle relevanten Informationen übertragen werden. Daten, die nur im Slow-cycle benötigt werden, können z.B. über zusätzliche Protokolle gestaffelt übertragen werden, um die Anforderungen an die Bandbreite zu begrenzen. Das bedeutet zusätzlichen Softwareaufwand in den Automatisierungskomponenten. Weiterhin wird sowohl die Busbandbreite als auch der minimal mögliche Kommunikationszyklus im gesamten System durch die niederperformanteste Komponente bestimmt.

Die US 4,639,910 offenbart einen gattungsgemäßen Schaltkreis mit einer Vielzahl von Duplex-Ports sowie einem Schalter, wobei der Schaltkreis mit unterschiedlichen Datenraten betrieben wird. Die Duplex-Ports liefern Instruktionen, mit denen die Verbindungen des Schalters gesteuert werden.

Der Erfindung liegt die Aufgabe zu Grunde ein verbessertes Verfahren und einen verbesserten elektronischen Schaltkreis für eine Kommunikationsschnittstelle sowie ein entsprechendes Computerprogrammprodukt zu schaffen.

Die der Erfindung zu Grunde liegende Aufgabe wird mit dem Merkmalen der unabhängigen Patentansprüche jeweils gelöst.

Die Erfindung erlaubt es eine Kommunikationsschnittstelle zwischen verschieden performanten zyklisch getakteten Kommunikationsverbindungen zu realisieren. Dadurch ermöglicht es die Erfindung, beispielsweise in einem Automatisierungssystem verschieden performante Kommunikationsverbindungen zu betreiben, deren Charakteristik der jeweiligen Applikation angepasst ist. Beispielsweise kann mittels der Erfindung für langsame Ein- / Ausgabebaugruppen eine niederperformante Kommunikationsschnittstelle zur Verfügung gestellt werden, so dass die Baugruppen über eine entsprechende Schnittstelle mit der zugeordneten Ablaufebene in der Steuerung kommunizieren können.

Ein besonderer Vorteil der Erfindung ist darin zu sehen, dass eine Skalierung der Kommunikationsschnittstellen hinsichtlich verschiedener Kriterien realisiert werden kann, insbesondere hinsichtlich:
- Skalierung bezüglich Echtzeitfähigkeit der Kommunikationsschnittstellen mit Anwendungen für:
   - Standard-Ethernet mit Standardprotokollen (TCP/IP), Soft Realtime Ethernet (SRTE) - hierunter wird ein echtzeitfähiges Ethernet verstanden, in dem die Echtzeitfunktionalität ohne "veredelte" Hardwarekomponenten durch entsprechende Software realisiert ist oder in dem wesentliche Teile der Echtzeitfähigkeit durch Software realisiert sind und andere funktionelle Komponenten durch einen Application Specific Integrated Circuit (ASIC). Ein solches SRTE ist durch relativ geringe Taktsynchronisierung und Kommunikationszyklen im Bereich vorzugsweise zwischen 3 ms und 10 ms gekennzeichnet. Basierend auf Standard-Ethernet Komponenten kann dabei die Echtzeitfähigkeit durch entsprechende Software und/oder ASIC Funktionalität realisiert werden.
   - Isochrones Realtime Ethernet (IRTE) - hierunter wird ein auf Ethernet Technologie basierendes Kommunikationssystem verstanden, welches innerhalb eines Kommunikationszyklus, dem so genannten Isochronzyklus, sowohl die Übertragung von echtzeitkritischen Daten als auch nicht echtzeitkritischen Daten erlaubt. Die Trennung der planbaren Echtzeitkommunikation und der nicht planbaren, nicht echtzeitkritischen Kommunikation wird durch die Anwendung des Verfahrens zur Zeitsynchronisation gemäß der nicht veröffentlichten Anmeldung DE 100 04 425.5 gewährleistet. Ein solches IRTE ist durch relativ hohe Taktsynchronsierung von beispielsweise einer Mikrosekunde und durch relativ kurze deterministische Kommunikationszyklen mit Übertragung von Echtzeitdaten z. B. Kommunikationszyklen von 125 µs bis 10 ms gekennzeichnet. Die Echtzeitfunktionalität wird durch Software und durch entsprechende veredelte Hardwarekomponenten, wie z. B. so genannte Switches, Hubs und integrierte Switches, realisiert.
- Skalierung bzgl. möglicher Übertragungsraten (Bd = Baud)
   - z.B. 10MBd, 100MBd, 1GBd
   - Skalierung bzgl. der Übertragungsrate um qualitativ unterschiedliche Automatisierungskomponenten einbinden zu können z.B.
      - 100MBd Isochrone Echtzeit Ethernet Verbindung für synchronisierte Antriebe und Fast I/O und
      - z.B. 10MBd Verbindung zum Anschluss an ein Peripheriegerät mit Kamerasystem oder Barcodeleser
      - z.B. 100MBd Standard Ethernet Anschluss für Anbindung an ein Leitsystem, Engineeringsystem und/oder Internet
- Skalierung bzgl. der Beziehungen der Kommunikationsschnittstellen
   - Synchronisiert mit gleichem Zyklus
   - Synchronisiert mit untersetztem Zyklus
   - Zueinander synchronisierte Fast- und Slow-Cycle (eine SS "fast", eine SS "slow")
   - Konsistenter Datenaustausch zwischen den Kommunikationsschnittstellen
   - Routing zwischen den Kommunikationsschnittstellen auf unterschiedlichem Qualitätsniveau,
   - Redundanz:
      - Datenübertragung über disjunkte Pfade
      - Taktübertragung über disjunkte Pfade
- Skalierung bzgl. der Beziehungen der Kommunikationsschnittstellen zu den Applikationen auf den Automatisierungskomponenten
   - Fast- und Slow-Applikationen, die auf diese Fast- und Slow-Cycle synchronisiert sind
- Skalierung bzgl. anschließbarer Geräte
   - ES, OP, Leitsystem, Internet über Standardethernet
   - Komponenten mit Isochronen Realtime Ethernet Eigenschaften
   - Komponenten mit Soft Realtime Ethernet Eigenschaften
   - Sensorik/Aktorik (z.B. I/Os, Antriebe, Kameras, Barcodeleser, Geber) mit verschiedenen Baudraten (z.B. 10MBd, 100Mbd)

Ein weiterer besonderer Vorteil der Erfindung ist darin zu sehen, dass aufgrund dieser Skalierbarkeit die verfügbaren, getakteten, physisch getrennten Übertragungszyklen mit den jeweiligen Applikationszyklen gekoppelt bzw. zu diesen zugeordnet werden können. Damit ist es möglich, die Kommunikation an die jeweiligen Anforderungen von Teilen der Applikation anzupassen, ohne dass die höchste Applikationsanforderung des Automatisierungssystems die entsprechende Kommunikationsperformance für alle Komponenten des Systems erforderlich macht.

Ein weiterer besonderer Vorteil der Erfindung ist, dass in einem Koppelknoten nicht mehrere separate Kommunikationsschnittstellen für die Kopplung verschieden performanter Netze vorhanden sein müssen, wie dies im Stand der Technik der Fall ist. Aufgrund der erfindungsgemäß möglichen, hardwarenahen Realisierung der Kommunikationsschnittstelle ist ein schnelleres Ein- bzw. Auskoppeln der Daten in bzw. aus verschiedenen Segmenten möglich.

Aus verschiedenen Gründen werden in dezentralen Systemen zwischen verschiedenen Knoten unterschiedliche Kommunikationszyklen (bei gleicher Übertragungsrate z.B. 100MBit/s beim isochronen Real-Time-Fast-Ethernet) benötigt, wobei es Knoten - die so genannten Koppelknoten - gibt, die in diesem Fall gleichzeitig mit Knoten kommunizieren müssen, die unterschiedliche Kommunikationszyklen benutzen.

Eine bevorzugte Ausführungsform der Erfindung bezieht sich u. a. auf eine Kommunikationsanschaltung (Switch-ASIC), die a priori mehrere separate Kommunikationsverbindungen (Ports) beinhaltet. Die Kommunikation über die verschiedenen Verbindungen kann dabei synchron in einem für alle Ports gleichen Kommunikationszyklus erfolgen.

Die Erfindung bezieht sich ferner auf einen Mechanismus, der verschiedene Kommunikationszyklen (ganzzahlige Vielfache des kürzesten Kommunikationszyklus) an den verschiedenen Ports ermöglicht. Damit ist ein synchronisierter und konsistenter Austausch von Daten zwischen Knoten möglich, die mit verschiedenen Kommunikationszyklen arbeiten. Der synchronisierte Datenaustausch kann erfolgen
- entweder durch eine direkte Weiterleitung der Telegramme, wenn am Empfangs- und Zielport im Kommunikationszyklus ein Austausch von Echtzeitdaten erfolgt,
- oder durch eine Zwischenpufferung in einem gemeinsamen Speicher. Das heißt vom Empfangsport werden die Daten immer in den Zwischenpuffer geschrieben. Vom Sendeport werden die Daten zum entsprechenden Sendezeitpunkt aus dem Zwischenpuffer versendet.

An jedem einzelnen Port gibt es Sende- und Empfangslisten, die das Senden, Weiterleiten und Empfangen von Daten steuern. Dadurch, dass die einzelnen Ports unterschiedliche Kommunikationszyklen (ganzzahlige Vielfache des kürzesten Kommunikationszyklus) haben, werden die Sende- und Empfangslisten an den jeweiligen Ports verschieden oft abgearbeitet.

Die Zuordnung der von einem Port zu sendenden oder empfangenen Daten zu den Sende- bzw. Empfangslisten eines anderen Ports erfolgt in der Kommunikationsschnittstelle bzw. Kommunikationsanschaltung.

In der Kommunikationsschnittstelle können Daten sowohl über Ports mit einem schnelleren Kommunikationszyklus als auch über Ports mit einem langsameren Kommunikationszyklus empfangen oder versendet werden, wobei innerhalb der Kommunikationsschnittstelle eine Zuordnung eines empfangenen und zu versendenden Datentelegramms zu einem Übertragungszyklus des Ports, von dem aus das Datentelegramm gesendet werden soll, erfolgt.

Daten, die von einem Port mit einem langsameren Kommunikationszyklus über einen Port mit einen schnelleren Kommunikationszyklus versendet werden sollen, müssen entweder
- zwischengespeichert werden, damit dann auch in dem Zyklus, in dem keine Daten über den Port mit den langsameren Kommunikationszyklus ankommen, gültige Daten versendet werden können,
- bzw. in der Zeit, in der keine Daten über den Port mit dem langsameren Kommunikationszyklus ankommen, werden als ungültig gekennzeichnete Daten oder die im letzten Zyklus eingetroffenen Daten über den Port mit dem schnelleren Kommunikationszyklus wiederholt versendet.

Der Vorteil liegt u. a. darin, dass
a) auf einem Koppelknoten nur eine (Standard-) Kommunikationsschnittstelle implementiert werden muss und
b) keine zusätzliche Instanz zum Umkopieren der Daten zwischen den verschiedenen Kommunikationsschnittstellen notwendig ist, was insbesondere keine bzw. geringe Totzeiten zur Folge hat.

Ferner erlaubt es die Erfindung, verschieden performante Teil-Netzwerke miteinander zu koppeln. Die so genannten Isochronzyklen der verschiedenen Teil-Netzwerke können dabei unterschiedlich sein.

Nach einer bevorzugten Ausführungsform der Erfindung wird eine Kommunikationsanschaltung mittels eines so genannten Switch-ASIC realisiert, der mehrere separate Ein- / Ausgänge (Ports) für verschiedene Kommunikationsverbindungen beinhaltet. Nach dem Stand der Technik erfolgt die Kommunikation über die verschiedenen Verbindungen synchron in einem für alle Ports gleichen Kommunikationszyklus und gleicher Übertragungsrate. Die Erfindung erlaubt dagegen verschiedene Übertragungsraten und / oder verschiedene Kommunikationszyklen an den verschiedenen Ports. Dies ermöglicht einen konsistenten Austausch von Daten zwischen verschiedenen Knoten beispielsweise über ein so genanntes Koppelfeld des Switch-ASICS, und zwar mit verschiedenen Übertragungsraten und / oder unterschiedlichen Kommunikationszyklen.

Der konsistente Datenaustausch kann dabei über einen Zwischenpuffer in einem gemeinsamen Speicher erfolgen, das heißt, vom Empfangsport werden die Daten immer in den gemeinsamen Zwischenpuffer geschrieben. Vom Sendeport werden die Daten zum entsprechenden Sendezeitpunkt aus dem Zwischenpuffer versendet.

Zur Gewährleistung der Datenkonsistenz kann an jedem Port ein zusätzlicher Sende- und Empfangspuffer mit einer Größe entsprechend der maximalen Telegrammmenge vorgesehen sein.

In einer bevorzugten Ausführungsform der Erfindung werden die Daten in den gemeinsamen Zwischenpuffer kopiert, nachdem das Telegramm am Empfangsport komplett empfangen worden ist - sog. store-and-forward Verfahren. Beim Senden werden die Daten immer aus dem Zwischenpuffer in den Sendepuffer des Sendeports kopiert. Durch eine Zugriffssteuerung auf den gemeinsamen Zwischenspeicher wird gewährleistet, dass es während des Lesens und Schreibens in den Zwischenpuffer zu keinen Überholungen kommen kann. Alternativ kann beispielsweise auch ein so genanntes cut-through Verfahren verwendet werden.

Ein weiterer Vorteil der Erfindung ist, dass sich ein Automatisierungssystem realisieren lässt, welches verschieden performante Teil-Netze beinhaltet, insbesondere zur Anwendung bei und in Verpackungsmaschinen, Pressen, Kunststoffspritzmaschinen, Textilmaschinen, Druckmaschinen, Werkzeugmaschinen, Robotor, Handlingssystemen, Holzverarbeitungsmaschinen, Glasverarbeitungsmaschinen, Keramikverarbeitungsmaschinen sowie Hebezeugen.

Im Weiteren wird ein bevorzugtes Ausführungsbeispiel der Erfindung mit Bezugnahme auf die Zeichnungen näher erläutert.
Es zeigen:
- Fig. 1: ein Blockdiagramm einer Automatisierungskomponente mit einer Ausführungsform einer erfindungsgemäßen Kommunikationsschnittstelle,
- Fig. 2: ein Blockdiagramm einer Ausführungsform eines erfindungsgemäßen elektronischen Schaltkreises und entsprechende Kommunikationsverbindungen zwischen zwei Teilnehmern verschieden performanter Netze,
- Fig. 3: ein Flussdiagramm einer ersten bevorzugten Ausführungsform des erfindungsgemäßen Verfahrens,
- Fig. 4: ein Flussdiagramm einer zweiten bevorzugten Ausführungsform hinsichtlich des Sendens eines Datentelegramms von einem niederperformanten zu einem höherperformanten Netz,
- Fig. 5: eine bevorzugte Ausführungsform eines erfindungsgemäßen Automatisierungssystems,
- Fig. 6: ein Ausführungsbeispiel eines Automatisierungssystems mit unterschiedlich performanten Teil-Netzen.

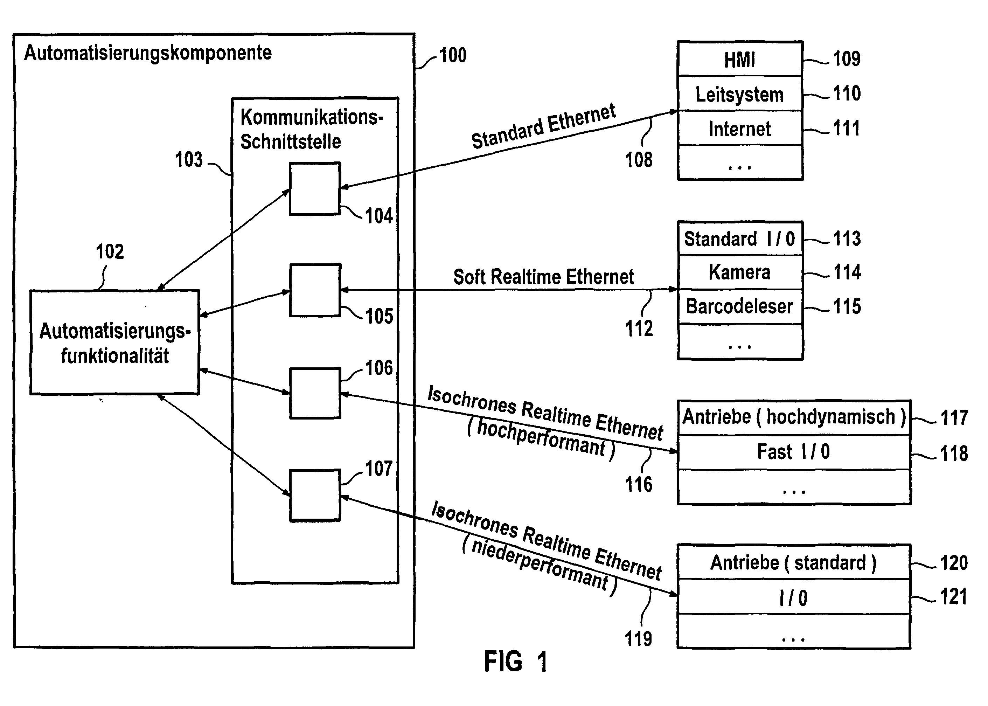

Die Fig. 1 zeigt eine Automatisierungskomponente 100 mit einer Steuerung 102. Bei der Steuerung 102 kann es sich beispielsweise um eine so genannte Motioncontrol zur Steuerung einer Anlage handeln. Beispielsweise kann die Steuerung 102 zur Steuerung verschiedener Achsen, Antriebe und anderer Aggregate der Anlage dienen. Die Automatisierungskomponente 100 hat eine Kommunikationsschnittstelle 103 mit den Kommunikationsports 104, 105, 106 und 107.

Die Kommunikationsports 104 bis 107 sind skalierbar. Beispielsweise ist die Länge eines Kommunikations- oder Übertragungszyklus je nach den Systemanforderungen wählbar. Die Spezifizierung der Eigenschaften der jeweiligen Kommunikationsports 104 bis 107 kann durch die Projektierung spezifiziert sein oder kann auch durch einen Plug-and-Play Mechanismus beim Anschalten eines Geräts an einen der Kommunikationsports 104 bis 107 erfolgen.

Der Kommunikationsport 104 ist über eine Kommunikationsverbindung 108 mit einer Mensch-Maschine-Schnittstelle ("Human Machine Interface") 109, einem Leitsystem 110 und einem Internetzugang 111 verbunden. Die Kommunikationsverbindung 108 ist als Standard Ethernet Verbindung ausgebildet.

Der Kommunikationsport 105 ist dagegen für eine so genannte Soft Realtime Ethernet Kommunikationsverbindung 112 skaliert. Über die Kommunikationsverbindung 112 kommuniziert der Kommunikationsport 105 beispielsweise mit einer Standard Ein-/Ausgabe Einheit 113 ("Standard I/O"), einer Kamera 114 sowie einem Barcodeleser 115 und/oder weiteren Einheiten bzw. Geräten.

Der Kommunikationsport 106 ist zur Anbindung an ein Isochrones Realtime Ethernet ausgebildet und für eine hochperformante Kommunikationsverbindung 116 konfiguriert. Über die hochperformante Isochrone Realtime Ethernet Kommunikationsverbindung 116 kommuniziert der Kommunikationsport 106 mit einem Antrieb 117, der hochdynamisch ist, das heißt dessen Regelung eine Kommunikationsverbindung mit relativ großer Bandbreite und großer Abtastrate erfordert. Ferner kommuniziert der Kommunikationsport 106 mit der Ein-/Ausgabe Einheit 118, die als "Fast I/O" ausgebildet ist und/oder weiteren Einheiten bzw. Geräten.

Der Kommunikationsport 107 ist ebenfalls zur Anbindung an ein Isochrones Realtime Ethernet ausgebildet, wobei die Skalierung des Kommunikationsports 107 für ein niederperformantes Isochrones Realtime Ethernet gewählt ist. Über eine entsprechende Kommunikationsverbindung 119 eines niederperformanten Isochronen Realtime Ethernet kommuniziert der Kommunikationsport 107 mit einem Standardantrieb 120 und mit einer Standard Ein-/Ausgabe Einheit 121 und/oder weiteren Einheiten bzw. Geräten.

Besonders vorteilhaft bei der Ausführungsform der Fig. 1. ist, dass die Kommunikationsschnittstelle 103 in die Automatisierungskomponente 100 integriert ist und die Realisierung einer Anzahl von grundsätzlich gleichartigen Kommunikationsschnittstellen erlaubt. Beispielsweise können die Kommunikationsports 104 bis 107 eine einheitliche Anschlusstechnik für einheitliche Kabelmedien aufweisen.

Die Kommunikationsschnittstelle 103 ist bezüglich ihrer Leistungs- und Nutzungsfunktionalität skalierbar. Die Skalierbarkeit drückt sich u. a. in einer Kombination folgender Eigenschaften aus:
- Die Kommunikation über eine der Kommunikationsverbindungen 108, 112, 116 und 119 läuft immer auf der Basis einer Standardprotokollfunktionalität, z. B. TCP/IP bei Ethernet, ab.
- Wahlweise kann eine Kommunikationsverbindung als echtzeitfähige oder nicht echtzeitfähige Kommunikationsverbindung skaliert werden.

Es sind verschiedene Geräte an die Automatisierungskomponente 100 anschließbar, die unterschiedliche Anforderungen an die Performanz der Kommunikationsverbindung stellen, beispielsweise Komponenten die an einen Soft Realtime Ethernet Kommunikationsport oder an einen Isochronen Realtime Ethernet Kommunikationsport mit Echtzeitfähigkeit anschließbar sind oder auch Komponenten, die lediglich eine niederperformante Echtzeitfähigkeit oder auch keine Echtzeitfähigkeit benötigen.

Die Übertragungsrate, das heißt die Baudrate, kann je nach den Anforderungen der anzuschließenden Geräte skaliert werden, wobei die Skalierung durch eine entsprechende Konfiguration der Software der Kommunikationsschnittstelle 103 erfolgen kann. Die Konfiguration kann im Rahmen der Projektierung des Automatisierungssystems erfolgen oder mittels eines Plug-and-Play Mechanismus.

Zwischen verschiedenen Kommunikationsschnittstellen 103 in einem Automatisierungssystem besteht eine Routingfunktionalität. Hierzu weisen die Kommunikationsschnittstellen vorzugsweise ein Koppelfeld auf.

Synchronisation bzw. Synchronisierung ist zwischen den Kommunikationsschnittstellen herstellbar, was insbesondere für die Echtzeitkommunikation wichtig ist. Synchrone Übertragungszyklen können dabei die gleiche Länge aufweisen oder auch unterschiedlich lang sein, wobei dann die Länge des einen Übertragungszyklus ein ganzzahliges Vielfaches der Länge des anderen Übertragungszyklus beträgt. Dies ist besonders vorteilhaft, da sich auf diese Art und Weise die zur Verfügung stehenden Systemressourcen effektiv nutzen lassen. Beispielsweise werden von einem Regler in einer Anlage zwanzig Achsen geregelt.

Sechs der Achsen sind hochdynamisch und erfordern einen Übertragungszyklus von 1 ms. Die restlichen vierzehn Achsen sind weniger zeitkritisch und verlangen einen Übertragungszyklus von z. B. 4 ms oder 8 ms. Jede der zwanzig Achsen weist einen Sensor auf, der mit den entsprechenden Taktraten die IstWerte der Lage der Achse erfasst.

Diese müssen mit den entsprechenden Taktraten zu einer Kommunikationsschnittstelle übertragen werden. Aufgrund der Skalierbarkeit der Kommunikationsschnittstelle ist es möglich, eine erste Kommunikationsverbindung hochperformant zu skalieren, um die sechs Achsen zu bedienen und eine zweite Kommunikationsverbindung niederperformant zu skalieren, um die vierzehn weniger zeitkritischen Achsen zu regeln.

Auf diese Art und Weise wird insbesondere auch die in dem Regler zur Verfügung stehende Rechenleistung effizient genutzt und es ist keineswegs - wie im Stand der Technik - erforderlich, den Regler insgesamt mit der hohen Taktfrequenz von 1 ms zu betreiben.

Erfindungsgemäß lässt sich weiter eine Redundanzfunktionalität dadurch realisieren, dass redundante Kommunikationsverbindungen mittels einer Aneinanderreihung von Punkt-zu-Punkt-Verbindungen zwischen den Knoten eines Netzwerks realisiert werden.

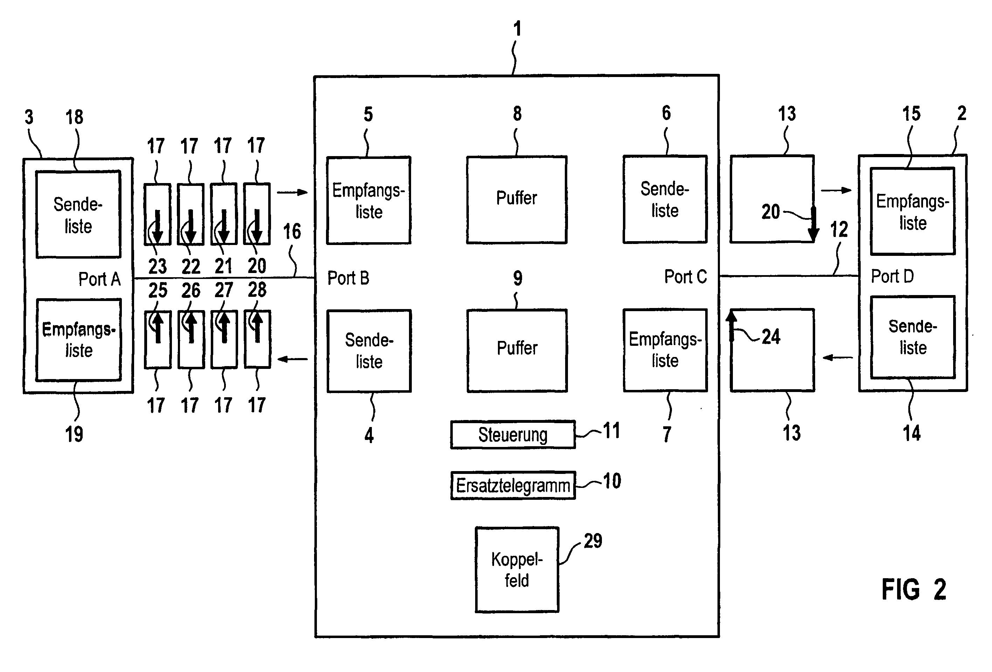

Die Fig. 2 zeigt einen elektronischen Schaltkreis 1, der als Koppelknoten zwischen den Knoten 2 und 3 dient.

Der Koppelknoten 1 hat die beiden Kommunikationsports Port B und Port C. Dem Port B ist eine Sendeliste 4 und eine Empfangsliste 5 zugeordnet. Die Sendeliste 4 bestimmt in einem deterministischen Kommunikationssystem zu welchen Zeitpunkten welche Datentelegramme an welche Empfänger vom Koppelknoten 1 an dessen Port B zu senden sind. Entsprechend bestimmt die Empfangsliste 5 die von den verschiedenen Knoten des Kommunikationssystems zu verschiedenen Zeitpunkten am Port B zu empfangenden Datentelegramme. Die Art, der Zeitpunkt und der Adressat der Datentelegramme sind also im Voraus bestimmt; es ändern sich lediglich die mit den Datentelegrammen jeweils transportierten Nutzdaten.

Der Port C hat eine entsprechende Sendeliste 6 und eine Empfangsliste 7 für vom Port C zu sendende Datentelegramme bzw. zu empfangende Datentelegramme.

Der Koppelknoten 1 hat ferner einen Pufferspeicher 8 für vom Port B empfangene und/oder vom Port C auszusendende Datentelegramme sowie einen Pufferspeicher 9 für vom Port C empfangene und/oder vom Port B zu sendende Datentelegramme. Beispielsweise können die Pufferspeicher 8 und 9 durch ein gemeinsames Speicherelement oder auch im Koppelfeld 29 realisiert sein.

Der Koppelknoten 1 hat ferner einen Speicher 10 für ein Ersatztelegramm sowie eine Steuerung 11, welche ganz oder teilweise schaltungstechnisch oder durch Mikrocode realisiert werden kann.

Der Koppelknoten 1 ist mit dem Knoten 2 über eine Kommunikationsverbindung 12 verbunden. Bei der Kommunikationsverbindung 12 handelt es sich um eine niederperformante Verbindung mit einer relativ geringen Datenrate und einem relativ langen Übertragungszyklus 13, der auch als Rahmen oder "Frame" bezeichnet wird.

Die Kommunikationsverbindung 12 verbindet den Port C mit einem Port D des Knotens 2. Dem Port D sind eine Sendeliste 14 und eine Empfangsliste 15 zugeordnet, die wiederum die deterministische Übertragung von Datentelegrammen über das Kommunikationssystem, das heißt, über die Kommunikationsverbindung 12 spezifizieren.

Entsprechend ist der Port B des Koppelknotens 1 mit einem Port A des Knotens 3 über eine Kommunikationsverbindung 16 verbunden, wobei es sich bei der Kommunikationsverbindung 16 um eine hochperformante Verbindung mit einer relativ hohen Datenrate und einem relativ kurzen Übertragungszyklus 17 handelt.

Dem Port A des Knotens 3 sind wiederum eine Sendeliste 18 und eine Empfangsliste 19 für die deterministische Übertragung von Datentelegrammen von bzw. zu dem Knoten 3 zugeordnet.

Die Kommunikation über die Kommunikationsverbindungen 12 und 16 läuft in den zyklisch wiederholten Übertragungszyklen 13 bzw. 17 ab, die ihrerseits in Zeitschlitze unterteilt sein können. Während eines Übertragungszyklus 13 bzw. 17 werden die entsprechenden Empfangs- und Sendelisten abgearbeitet, wobei verschiedene Datentelegramme den betreffenden Zeitschlitzen in einem Übertragungszyklus zugeordnet werden. In dem betrachteten Beispiel der Fig. 2 sind vier zeitlich aufeinanderfolgende Übertragungszyklen 17 gezeigt, in denen jeweils ein oder mehrere Datentelegramme übertragen werden. Der Übersichtlichkeit halber ist in der Fig. 2 für jeden Übertragungszyklus 17 nur ein Datentelegramm 20, 21, 22 bzw. 23 gezeigt.

Vorzugsweise sind die Kommunikationsverbindungen 12 und 16 miteinander synchronisiert, das heißt, der Beginn der Übertragungszyklen 13 und 17 weist keine Phasenverschiebung auf. Die Länge der Übertragungszyklen 13 und 17 kann gleich sein oder sie ist - wie in dem hier betrachteten Beispiel - ein ganzzahliges Vielfaches, das heißt, die Länge des Übertragungszyklus 13 beträgt ein ganzzahliges Vielfaches des Übertragungszyklus 17.

In einem ersten Anwendungsfall werden die Datentelegramme 20, 21, 22 und 23 gemäß der Sendeliste 18 vom Knoten 3 jeweils im Übertragungszyklus 17 über die Kommunikationsverbindung 16 an den Port B des Koppelknotens 1 übertragen. Die Datentelegramme 20 bis 23 tragen dabei jeweils eine bestimmte Nutzinformation, beispielsweise eine Drehzahl, wenn es sich bei dem Knoten 3 um einen Drehzahlmesser handelt. Der Drehzahlmesser gibt also in dem deterministischen System innerhalb jedes Übertragungszyklus 17 einen Wert aus, der zu übertragen ist. Die entsprechende Übertragung ist in der Sendeliste 18 und der entsprechenden Empfangsliste 5 festgelegt.

Diese Datentelegramme 20 bis 23 werden im Knoten 1 am Port B gemäß der Empfangsliste 5 empfangen und können im Pufferspeicher 8 zwischengespeichert werden. Im Koppelknoten 1 wird dann eines der Datentelegramme 20 bis 23 beispielsweise von der Steuerung 11 ausgewählt, um gemäß der Sendeliste 6 im Übertragungszyklus 13 der Kommunikationsverbindung 12 vom Port C an den Port D des Knotens 2 übertragen zu werden.

Grundsätzlich kann ein beliebiges Datentelegramm der Datentelegramme 20 bis 23 ausgewählt werden - in dem betrachteten Ausführungsbeispiel wird immer das zuerst gesendete Datentelegramm des Übertragungszyklus 17 ausgewählt, das heißt hier das Datentelegramm 20. Zur Sendung des Datentelegramms 20 muss der Port C also lediglich auf den Pufferspeicher 8 zugreifen, um von dort das Datentelegramm 20 für die Sendung gemäß der Sendeliste 6 abzurufen. Dieser Mechanismus läuft dabei vollständig auf Hardwareebene oder auf einer hardwarenahen Ebene ab, ohne dass auf einer höheren programmtechnischen Ebene die Daten transformiert und / oder umformatiert werden müssen.

Beispielsweise kann auf diese Art und Weise eine Untersetzung erfolgen, wie das in dem Anwendungsfall der Fig. 2 der Fall ist, das heißt, von den vier empfangenen Datentelegrammen 20 bis 23 wird lediglich das Datentelegramm 20 weiter übertragen.

Wenn die Erfassung der Messwerte in dem Knoten 3 mit einer so genannten Überabtastung erfolgt, das heißt, beispielsweise mit einer Abtastfrequenz, die um einen Faktor vier oder höher über der so genannten Shannon-Frequenz liegt, ist dieser Vorgang ohne Informationsverlust.

In einem weiteren Anwendungsfall wird vom Knoten 2 gemäß dessen Sendeliste 14 ein Datentelegramm 24 im Übertragungszyklus 13 über die Kommunikationsverbindung 12 von dessen Port D an den Port C des Koppelknotens 1 gesendet. Das Datentelegramm 24 wird vom Port C des Koppelknotens 1 gemäß dessen Empfangsliste 7 empfangen und im Pufferspeicher 9 zwischengespeichert.

Der Koppelknoten 1 sendet dann gemäß dessen Sendeliste 4 von dessen Port B in den nächsten Übertragungszyklen 17 die Datentelegramme 25, 26, 27 bzw. 28. Dies kann so erfolgen, dass es sich bei den Datentelegrammen 25 bis 28 jeweils um eine Kopie oder einen Teil des Datentelegramms 24 handelt. Auf diese Art und Weise werden die Belange der Empfangsliste 19 erfüllt, die in jedem Datenschlitz des Übertragungszyklus 17 ein Datentelegramm erwartet.

Eine alternative Möglichkeit ist die Speicherung eines Ersatztelegramms im Speicher 10, welches keine Nutzinformation trägt. In diesem Fall ist nur eines der Datentelegramme 25 bis 28 eine Kopie des Datentelegramms 24, beispielsweise das Datentelegramm 25, während die weiteren Datentelegramme 26 bis 28 jeweils Kopien des Ersatztelegramms des Speichers 10 sind. Dieser Vorgang kann beispielsweise kontrolliert durch die Steuerung 11 erfolgen.

Insgesamt ist es also so, dass bei einer n-fachen Sendung eines Datentelegramms vom Knoten 3, beispielsweise einer vierfachen Sendung, dieses Datentelegramm vom Knoten 1 an den Knoten 2 m-fach gesendet wird, wobei m < n ist, vorzugsweise m =1 wie in dem betrachteten Beispiel.

Andererseits wird bei einer n-fachen Sendung eines Datentelegramms über die niederperformante Kommunikationsverbindung 12 dieses Datentelegramm entweder m-fach wiederholt, das heißt, in dem betrachteten Beispiel erfolgt eine vierfache Wiederholung bei einer einmaligen Sendung, oder das gesendete Datentelegramm wird nur einmal gesendet und es erfolgt eine zusätzliche Sendung von m-1 Ersatztelegrammen.

Der Koppelknoten 1 hat ferner ein Koppelfeld 29 über welches im Koppelknoten 1 Kommunikationsverbindungen zwischen den Ports B und C sowie erforderlichenfalls weiterer in der Fig. 2 nicht gezeigter Ports des Koppelknotens 1 hergestellt werden können.

Der dem Koppelknoten 1 zugrunde liegende elektronische Schaltkreis kann auch für die Realisierung einer Geräteschnittstelle z.B. eines Steuergeräts mit unterschiedlich performanten Kommunikationsverbindungen verwendet werden. Ein Koppelfeld ist für diese Anwendung nicht erforderlich.

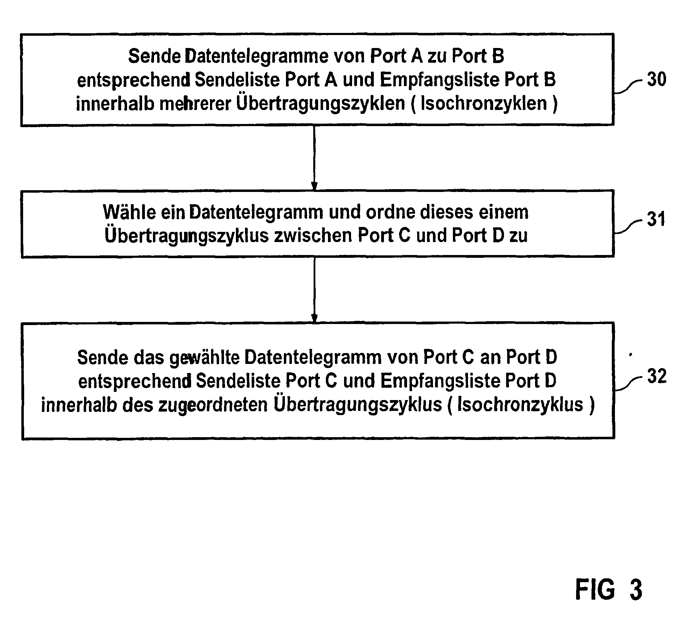

Die Fig. 3 zeigt ein entsprechendes Flussdiagramm.

Im Schritt 30 werden zunächst eine Anzahl von m Datentelegrammen vom Port A zum Port B über eine Kommunikationsverbindung gemäß der entsprechenden Sende- und Empfangslisten der beteiligten Knoten innerhalb von m aufeinanderfolgenden Übertragungszyklen, das heißt, jedes Datentelegramm innerhalb eines so genannten Isochronzyklus, an denselben Adressaten gesendet. Neben diesen m Datentelegrammen können in jeweils freien Zeitschlitzen weitere Datentelegramme übertragen werden.

Im Schritt 31 wird zumindest eines dieser m Datentelegramme ausgewählt und einem Übertragungszyklus zwischen dem Port C und dem Port D zugeordnet. Die Auswahl des Datentelegramms kann determiniert sein, das heißt, beispielweise wird immer das erste empfangene Datentelegramm ausgewählt.

Im Schritt 32 wird sodann das gewählte oder die gewählten Datentelegramme vom Port C an den Port D entsprechend der maßgeblichen Sende- und Empfangslisten innerhalb des zugeordneten Übertragungszyklus über eine niederperformante Kommunikationsverbindung übertragen.

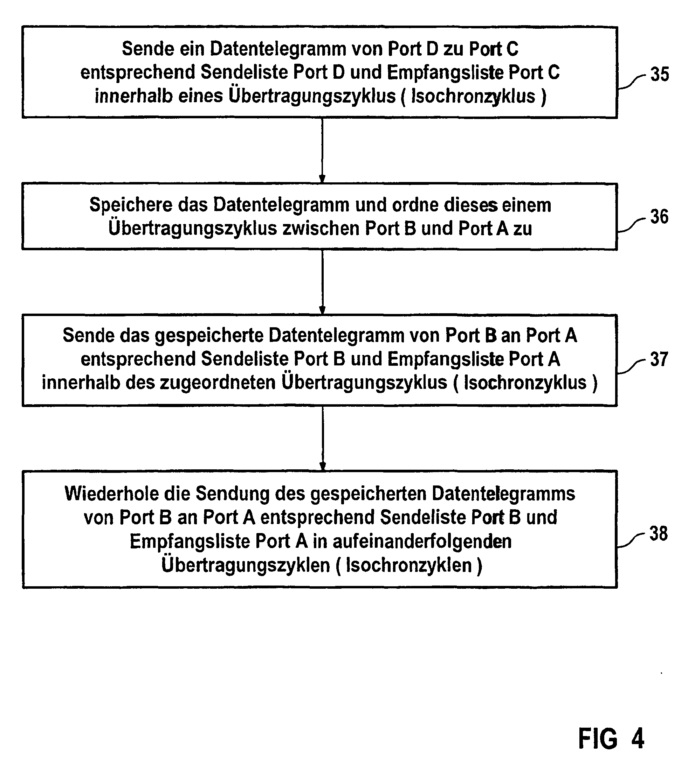

Die Fig. 4 veranschaulicht diesen Ablauf für die umgekehrte Richtung:

Im Schritt 35 wird ein Datentelegramm vom Port D zum Port C entsprechend der maßgeblichen Sende- bzw. Empfangslisten innerhalb eines Übertragungszyklus über eine niederperformante Kommunikationsverbindung übertragen. Im Schritt 36 wird dieses Datentelegramm gespeichert und einem Übertragungszyklus zwischen dem Port B und dem Port A zugeordnet. Hierbei handelt es sich beispielsweise um den nächstfolgenden Übertragungszyklus.

Im Schritt 37 wird das gespeicherte Datentelegramm vom Port B an den Port A entsprechend der maßgeblichen Sende- und Empfangslisten innerhalb des zugeordneten Übertragungszyklus gesendet. Im Schritt 38 wird diese Sendung in mehreren aufeinanderfolgenden Übertragungszyklen wiederholt. Statt einer Wiederholung im Schritt 38 können auch Ersatztelegramme versendet werden.

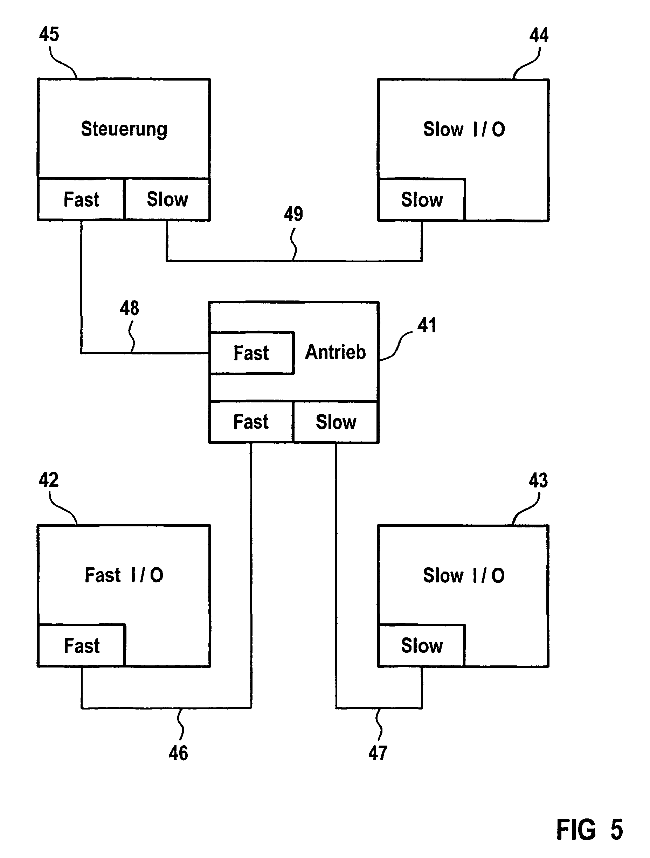

Die Fig. 5 zeigt ein Ausführungsbeispiel eines Automatisierungssystems mit den Knoten 41, 42, 43, 44 und 45. Bei dem Knoten 41 handelt es sich um einen Antrieb, der einen Koppelknoten mit den zwei Ports "Fast" und einem Port "Slow" beinhaltet. Der Port "Fast" entspricht dem Port B und der Port "Slow" entspricht dem Port C des Koppelknotens 1 der Fig. 2.

Ein Port "Fast" des Knotens 41 ist mit dem Port "Fast" des Knotens 42 verbunden, entsprechend dem Port A des Knotens 3 der Fig. 2. Bei der die Ports "Fast" der Knoten 41 und 42 verbindenden Leitung handelt es sich entsprechend um eine hochperformante Kommunikationsverbindung 46 entsprechend der Kommunikationsverbindung 16 der Fig. 2.

Der andere Port "Slow" des Knotens 41 ist über eine niederperformante Kommunikationsverbindung 47 mit einem Port "Slow" des Knotens 43 verbunden, entsprechend der Kommunikationsverbindung 12 bzw. dem Port D der Fig. 2.

Ferner ist ein weiterer Port "Fast" mit einem entsprechenden Port "Fast" des Knotens 45, beispielsweise einer Steuerung, über eine hochperformante Kommunikationsverbindung 48 verbunden. Der Knoten 45 hat einen Port "Slow", der über eine niederperformante Kommunikationsverbindung 49 mit einem entsprechenden Port "Slow" des Knotens 44 verbunden ist. Der Knoten 45 beinhaltet ebenfalls einen Koppelknoten des in der Fig. 2 gezeigten Typs. Der Knoten 44 entspricht in seinem Aufbau wiederum dem Knoten 2 der Fig. 2.

In dem Automatisierungssystem der Fig. 2 ist es also möglich, dass beispielsweise ein Datentelegramm vom Knoten 42 an den Knoten 44 übertragen wird, obwohl die Übertragung über drei Kommunikationsverbindungen jeweils unterschiedlicher Charakteristik erfolgen muss.

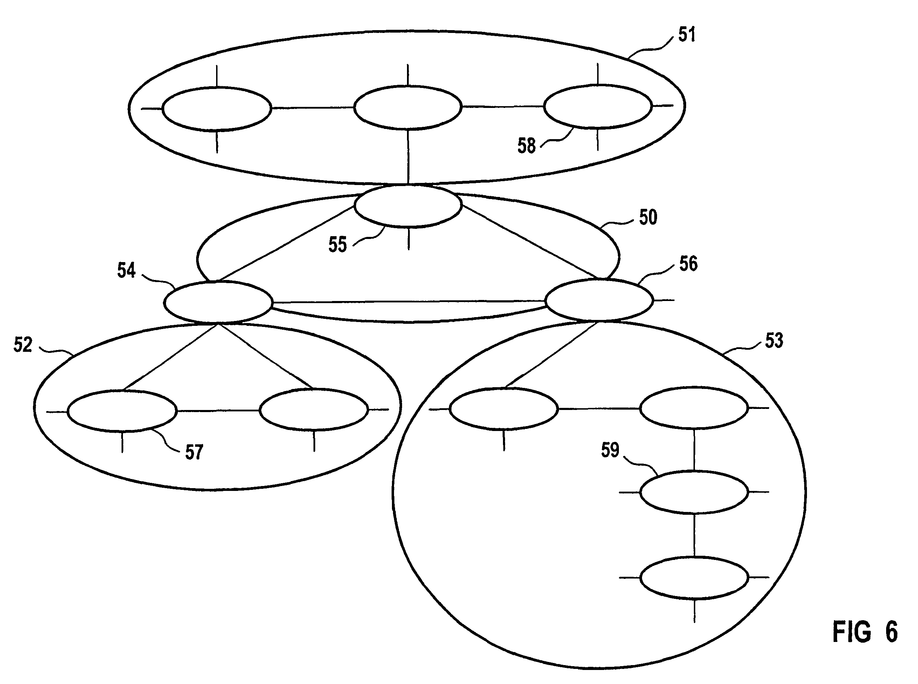

Dies kann auch für die Kopplung verschiedener Teil-Netze verwendet werden, wie mit Bezug auf die Fig. 6 näher erläutert wird:

Das Automatisierungssystem der Fig. 6 weist verschiedene Teil-Netze 50, 51, 52 und 53 auf. Die Teil-Netze 50 bis 53 können unterschiedliche Übertragungszyklen und / oder unterschiedliche Datenraten aufweisen. Vorzugsweise sind die Übertragungszyklen der verschiedenen Teil-Netze miteinander synchronisiert. Dies ist jedoch nicht zwingend der Fall.

Die entsprechenden Kommunikationssysteme dienen der Kommunikation der Knoten eines der Teil-Netze untereinander. Es kann jedoch auch eine Kommunikation über die Grenzen der Teil-Netze hinweg erfolgen. Hierzu sind die Knoten 54, 55 und 56 des Teil-Netzes 50 als Koppelknoten ausgebildet und zwar z. B. entsprechend Koppelknoten 1 der Fig. 2.

So können etwa der Knoten 57 des Teil-Netzes 52 und der Knoten 58 des Teil-Netzes 51 miteinander kommunizieren, obwohl die Teil-Netze 51 und 52 unterschiedliche Übertragungszyklen und / oder unterschiedliche Datenraten aufweisen. Entsprechend kann beispielsweise der Knoten 59 des Teil-Netzes 53 mit dem Knoten 57, dem Knoten 58 oder auch einem der Koppelknoten 54 bis 56 kommunizieren. Dies erlaubt es, verschiedene bereits bestehende Automatisierungssysteme zu einem Gesamtsystem miteinander zu vernetzen, ohne dass die Komponenten der bestehenden Systeme ausgetauscht werden müssen.

Vorzugsweise wird als Kommunikationssystem für die einzelnen Teil-Netze ein industrielles Ethernet, vorzugsweise ein Soft Realtime Ethernet oder ein Realtime Fast Ethernet mit jeweils unterschiedlichen Übertragungszyklen, das heißt, unterschiedlichen Isochronzyklen, und / oder unterschiedlichen Datenraten verwendet. Die Länge der Übertragungszyklen in den verschiedenen Teil-Netzen kann dabei beispielsweise 500 ms, 10 ms und 1ms betragen. Die unterschiedlichen Übertragungsraten können beispielsweise 100 MB/s, 10 MB/s und 1 MB/s betragen. Für den Übergang von einer Übertragungsrate auf eine andere findet in dem entsprechenden Koppelknoten eine Zwischenspeicherung der Echtzeitdaten statt.

## Patentansprüche

1. Elektronischer Schaltkreis für eine Kommunikationsschnittstelle (103) zwischen einer ersten zyklisch getakteten Kommunikationsverbindung (16) mit einem ersten Übertragungszyklus (17) einer ersten Länge und einer zweiten zyklisch getakteten Kommunikationsverbindung (12) mit einem zweiten Übertragungszyklus (13) einer zweiten Länge wobei der erste (17) und der zweite Übertragungszyklus (13) synchron sind und die Längen des ersten (17) und zweiten Übertragungszyklus (13) gleich sind oder ein ganzzahliges Vielfaches voneinander betragen, mit einer Empfangsliste (5, 7, 15, 19) für den ersten Übertragungszyklus (11) und einer Sendeliste (4, 6, 14, 18) für den zweiten Übertragungszyklus (13), wobei ein gemäß der Empfangsliste (5, 7, 15, 19) empfangenes Datentelegramm (20, 21, 22, 23, 24, 25, 26, 27, 28) einem Element der Sendeliste (4, 6, 14, 18) zugeordnet ist, **dadurch gekennzeichnet, dass** die Empfangsliste derart ausgestaltet ist, daß die Empfangszeitpunkte von während der ersten Übertragungszyklen zu empfangenden Datentelegrammen im Voraus festlegt und die Sendeliste derart ausgestaltet ist, daß die Sendezeitpunkte von während der zweiten Übertragungszyklen zu sendenden Datentelegrammen im Voraus festlegt.

2. Elektronischer Schaltkreis nach Anspruch 1 mit einer einheitlichen Anschlusstechnik für wenigstens eine oder mehrere Kommunikationsschnittstellen (103), für den Anschluss einheitlicher Kabelmedien.

3. Elektronischer Schaltkreis nach Anspruch 1 oder 2 mit einer Routingfunktionalität zwischen Kommunikationsschnittstellen (103).

4. Elektronischer Schaltkreis nach einem der vorhergehenden Ansprüche 1 bis 3, wobei die erste (16) und die zweite Kommunikationsverbindung (12) unterschiedliche Übertragungsraten haben.

5. Elektronischer Schaltkreis nach einem der vorhergehenden Ansprüche 1 bis 4, bei dem die Sendeliste (4, 6, 14, 18) zum m-fachen Absenden eines Datentelegramms (20 - 28) innerhalb von m aufeinanderfolgenden Übertragungszyklen (13, 17) ausgebildet ist, nachdem das Datentelegramm (20 - 28) n-fach innerhalb des ersten Übertragungszyklus (17) gemäß der Empfangsliste (5, 7, 15, 19) empfangen worden ist.

6. Elektronischer Schaltkreis nach Anspruch 5, bei dem m > n ist, sofern n ≥ 1 ist.

7. Elektronischer Schaltkreis nach Anspruch 6, derart ausgebildet, daß das Datentelegramm (20 - 28) gemäß der Sendeliste (4, 6, 14, 18) nur einmal gesendet wird und dass zusätzlich eine Anzahl von m-1 Ersatzdatentelegrammen gemäß der Sendeliste (4, 6, 14, 18) in dem zweiten Übertragungszyklus (13) gesendet werden.

8. Elektronischer Schaltkreis nach einem der vorhergehenden Ansprüche 1 bis 7, bei dem die erste (16) und / oder die zweite Kommunikationsverbindung (12) bidirektional sind und jeder der bidirektionalen Kommunikationsverbindungen jeweils eine Sendeliste (4, 6, 14, 18) und eine Empfangsliste (5, 7, 15, 19) zugeordnet sind.

9. Elektronischer Schaltkreis nach einem der vorhergehenden Ansprüche 1 bis 8, bei dem es sich bei dem Datentelegramm 30 (20 - 28) um Echtzeitdaten handelt.

10. Elektronischer Schaltkreis nach einem der vorhergehenden Ansprüche 1 bis 9, wobei es sich bei der ersten (16) und zweiten Kommunikationsverbindung (12) um ein industrielles Ethernet, insbesondere um ein Isochrones Realtime Ethernet IRTE oder ein Soft Realtime Ethernet SRTE handelt.

11. Elektronischer Schaltkreis nach einem der vorhergehenden Ansprüche 1 bis 10 mit mehreren Eingangs- und / oder Ausgangsports, denen jeweils eine Empfangs- (5, 7, 15, 19) und/oder Sendeliste (4, 6, 14, 18) zugeordnet ist, und mit einem Koppelfeld (29) zur Koppelung von wenigstens einem der Ports mit einem oder mehreren der anderen Ports.

12. Automatisierungssystem mit mehreren Komponenten (41, 42, 43, 44, 45), die durch Kommunikationsverbindungen (46, 47, 48, 49) miteinander verbunden sind, in dem jede der Komponenten (41 - 45) einen elektronischen Schaltkreis nach einem der vorhergehenden Ansprüche 1 bis 11 als integralen Bestandteil oder als Zusatzgerät aufweist.

13. Automatisierungssystem mit zumindest einem ersten Teilnetzwerk (50, 51, 52, 53) mit ersten Kommunikationsverbindungen und mit wenigstens einem zweiten Teilnetzwerk (50, 51, 52, 53) mit zweiten Kommunikationsverbindungen und mit zumindest einem Koppelknoten (54, 55, 56) zwischen den ersten und zweiten Teilnetzwerken (50 - 53) mit einem elektronischen Schaltkreis nach einem der vorhergehenden Ansprüche 1 bis 11.

14. Automatisierungssystem nach Anspruch 13 mit mehreren Koppelknoten (54 - 59), die durch ein drittes Teilnetzwerk (50) miteinander verbunden sind.

15. Automatisierungssystem nach Anspruch 13 oder 14, bei dem die unterschiedlichen Teilnetzwerke (50 - 53) verschiedene Übertragungszyklen und / oder Übertragungsraten aufweisen.

16. Verfahren zum Betreiben einer Kommunikationsschnittstelle (103) zwischen einer ersten zyklisch getakteten Kommunikationsverbindung (16) mit einem ersten Übertragungszyklus (17) einer ersten Länge und einer zweiten zyklisch getakteten Kommunikationsverbindung (12) mit einem zweiten Übertragungszyklus (13) einer zweiten Länge, wobei der erste (17) und der zweite Übertragungszyklus (13) zueinander synchron sind und die erste und die zweite Länge vorzugsweise gleich sind oder ein ganzzahliges Vielfaches voneinander betragen, mit folgenden Schritten:
- Empfang eines Datentelegramms (20 - 28) gemäß einer dem ersten Übertragungszyklus (17) zugeordneten Empfangsliste (5, 7, 15, 19) wobei durch die Empfangsliste die Empfangszeitpunkte von wäh rend der ersten Übertragungszyklen zu empfangenden Datentelegramme im Voraus bestimmt werden und
- Senden des Datentelegramms (20 - 28) gemäß einer dem zweiten Übertragungszyklus (13) zugeordneten Sendeliste (4, 6, 14, 18) wobei durch die Sendeliste die Sendezeitpunkte von während der zweiten Übertragungszyklen zu sendenden Datentelegrammen im Voraus bestimmt werden.

17. Verfahren nach Anspruch 16, bei dem die erste Kommunikationsverbindung (16) und die zweite Kommunikationsverbindung (12) unterschiedliche Übertragungsraten aufweisen.

18. Verfahren nach Anspruch 16 oder 17, bei dem ein Datentelegramm (20 - 28) von einem ersten Teilnehmer der ersten Kommunikationsverbindung (16) innerhalb des ersten Übertragungszyklus (17) empfangen wird und das Datentelegramm (20 - 28) m-fach innerhalb von m aufeinander folgenden Übertragungszyklen (17, 13) an einen zweiten Teilnehmer der zweiten Kommunikationsverbindung (12) gesendet wird.

19. Verfahren nach Anspruch 18, bei dem das Datentelegramm (20 - 28) nur einmal in dem zweiten Übertragungszyklus (13, 17) gesendet wird und ein Ersatzdatentelegramm m-1-fach in nachfolgenden zweiten Übertragungszyklen (13, 17) gesendet wird.

20. Verfahren nach einem der vorhergehenden Ansprüche 16 bis 19, bei dem es sich bei dem Datentelegramm (20 - 28) um Echtzeitdaten handelt.

21. Verfahren nach einem der vorhergehenden Ansprüche 16 bis 20, wobei über die erste (16) und zweite (12) Kommunikationsverbindung ein zyklischer Datenaustausch in äquidistanten Kommunikationszyklen erfolgt, die durch den vom System verwendeten Kommunikationstakt vorgegeben werden.

22. Verfahren nach einem der vorhergehenden Ansprüche 16 bis 21, wobei es sich bei der ersten (16) und der zweiten (12) Kommunikationsverbindung (12) jeweils um ein industrielles Ethernet, insbesondere ein Isochrones Realtime Ethernet oder ein Soft Realtime Ethernet handelt.

23. Verfahren nach einem der vorhergehenden Ansprüche 16 bis 22 wobei ein oder mehrere Ein- und / oder ein oder mehrere Ausgangsports, denen jeweils eine Empfangs- (5, 7, 15, 19) und/oder Sendeliste (4, 6, 14, 18) zugeordnet ist, über ein Koppelfeld (29) gekoppelt werden.

24. Verfahren nach einem der vorhergehenden Ansprüche 16 bis 23 bei dem der erste (17) und zweite Übertragungszyklus (13) keine Phasenverschiebung aufweisen.

25. Computerprogrammprodukt mit Programmmitteln zur Durchführung eines Verfahrens nach einem der vorhergehenden Ansprüche 16 bis 24, wenn die Programmmittel auf einem elektronischen Schaltkreis oder einem Automatisierungssystem ausgeführt werden.

## Claims

1. Electronic switching circuit for a communication interface (103) between a first cyclically clocked communication link (16) having a first transmission cycle (17) of a first length and a second cyclically clocked communication link (12) having a second transmission cycle (13) of a second length, with a receive list (5, 7, 15, 19) for the first transmission cycle (11) and a send list (4, 6, 14, 18) for the second transmission cycle (13), wherein a data telegram (20, 21, 22, 23, 24, 25, 26, 27, 28) received according to the receive list (5, 7, 15, 19) is associated with an element of the send list (4, 6, 14, 18),
**characterised in that** the receive list is embodied in such a way that the receive times of data telegrams to be received during the first transmission cycles are specified in advance and the send list is embodied in such a way that the send times of data telegrams to be sent during the second transmission cycles are specified in advance, with the first (17) and the second transmission cycle (13) being synchronous and the lengths of the first (17) and second transmission cycle (13) being equal or an integer multiple of each other.

2. Electronic switching circuit according to claim 1 having a standardised connection technology for at least one communication interface or for a plurality of communication interfaces (103), for the connection of standardised cable media.

3. Electronic switching circuit according to claim 1 or 2 having a routing functionality between communication interfaces (103).

4. Electronic switching circuit according to one of the preceding claims 1 to 3, wherein the first (16) and the second communication link (12) have different transmission rates.

5. Electronic switching circuit according to one of the preceding claims 1 to 4, wherein the send list (4, 6, 14, 18) is embodied for transmission of a data telegram (20 - 28) m times within m consecutive transmission cycles (13, 17) after the data telegram (20 - 28) has been received n times during the first transmission cycle (17) according to the receive list (5, 7, 15, 19).

6. Electronic switching circuit according to claim 5, wherein m > n if n ≥ 1.

7. Electronic switching circuit according to claim 6, embodied in such a way that the data telegram (20 - 28) is transmitted only once according to the send list (4, 6, 14, 18) and that in addition a plurality of m-1 replacement data telegrams is transmitted according to the send list (4, 6, 14, 18) during the second transmission cycle (13).

8. Electronic switching circuit according to one of the preceding claims 1 to 7, wherein the first (16) and/or the second communication link (12) are bi-directional and a send list (4, 6, 14, 18) and a receive list (5, 7, 15, 19) are associated in each case with each of the bi-directional communication links.

9. Electronic switching circuit according to one of the preceding claims 1 to 8, wherein the data telegram 30 (20 - 28) represents real-time data.

10. Electronic switching circuit according to one of the preceding claims 1 to 9, wherein the first (16) and the second communication link (12) form an industrial Ethernet, in particular an Isochronous Real-Time Ethernet IRTE or a Soft Real-Time Ethernet SRTE.

11. Electronic switching circuit according to one of the preceding claims 1 to 10 having a plurality of input and/or output ports, each of which has an associated receive (5, 7, 15, 19) and/or send list (4, 6, 14, 18), and having a switching stage (29) for linking at least one of the ports with one or more of the other ports.

12. Automation system having a plurality of components (41, 42, 43, 44, 45) which are connected with one another by means of communication links (46, 47, 48, 49), with each of the components (41 - 45) having an electronic switching circuit according to one of the preceding claims 1 to 11 as an integral component or as an add-on device.

13. Automation system having at least one first sub-network (50, 51, 52, 53) with first communication links and with at least one second sub-network (50, 51, 52, 53) with second communication links and with at least one switching node (54, 55, 56) between the first and second sub-networks (50 - 53) with an electronic switching circuit according to one of the preceding claims 1 to 11.

14. Automation system according to claim 13 having a plurality of switching nodes (54 - 59) which are connected to one another by means of a third sub-network (50).

15. Automation system according to claim 13 or 14, wherein the different sub-networks (50 - 53) have different transmission cycles and/or transmission rates.

16. Method for operating a communication interface (103) between a first cyclically clocked communication link (16) with a first transmission cycle (17) of a first length and a second cyclically clocked communication link (12) with a second transmission cycle (13) of a second length, wherein the first (17) and the second transmission cycle (13) are synchronised with each other and the first and the second length are preferably equal or an integer multiple of each other, comprising the following steps:
- receive a data telegram (20 - 28) according to a receive list (5, 7, 15, 19) associated with the first transmission cycle (17) and
- transmit the data telegram (20 - 28) according to a send list (4, 6, 14, 18) associated with the second transmission cycle (13), with the receive times of data telegrams to be received during the first transmission cycles being determined in advance by the receive list and the send times of data telegrams to be sent during the second transmission cycles being determined in advance by the send list.

17. Method according to claim 16, wherein the first communication link (16) and the second communication link (12) have different transmission rates.

18. Method according to claim 16 or 17, wherein a data telegram (20 - 28) is received from a first subscriber of the first communication link (16) during the first transmission cycle (17) and the data telegram (20 - 28) is transmitted m times within m consecutive transmission cycles (17, 13) to a second subscriber of the second communication link (12).

19. Method according to claim 18, wherein the data telegram (20 - 28) is transmitted only once during the second transmission cycle (13, 17) and a replacement data telegram is transmitted m-1 times in subsequent second transmission cycles (13, 17).

20. Method according to one of the preceding claims 16 to 19, wherein the data telegram (20 - 28) contains real-time data.

21. Method according to one of the preceding claims 16 to 20, wherein a cyclic data exchange takes place via the first (16) and the second (12) communication link in equidistant communication cycles which are predefined by the communication clock cycle used by the system.

22. Method according to one of the preceding claims 16 to 21, wherein the first (16) and the second (12) communication link (12) each represent an industrial Ethernet, in particular an Isochronous Real-Time Ethernet or a Soft Real-Time Ethernet.

23. Method according to one of the preceding claims 16 to 22, wherein one or more input ports and/or one or more output ports, each having associated therewith a receive list (5, 7, 15, 19) and/or a send list (4, 6, 14, 18), are linked together via a switching stage (29).

24. Method according to one of the preceding claims 16 to 23, wherein the first (17) and the second transmission cycle (13) do not exhibit a phase shift.

25. Computer programme product having programme means for performing a method according to one of the preceding claims 16 to 24 when the programme means are executed on an electronic switching circuit or an automation system.

## Revendications

1. Circuit électronique pour une interface de communication (103) entre une première liaison de communication cadencée en cycles (16) avec un premier cycle de transmission (17) d'une première longueur et une deuxième liaison de communication cadencée en cycles (12) avec un deuxième cycle de transmission (13) d'une deuxième longueur, le premier cycle de transmission (17) et le deuxième cycle de transmission (13) étant synchrones et les longueurs du premier cycle de transmission (17) et du deuxième cycle de transmission (13) étant égales ou l'une étant un multiple entier de l'autre, avec une liste de réception (5, 7, 15, 19) pour le premier cycle de transmission (17) et avec une liste d'émission (4, 6, 14, 18) pour le deuxième cycle de transmission (13), un télégramme de données (20, 21, 22, 23, 24, 25, 26, 27, 28) reçu selon la liste de réception (5, 7, 15, 19) étant associé à un élément de la liste d'émission (4, 6, 14, 18), **caractérisé par le fait que** la liste de réception est conçue de telle sorte qu'elle fixe au préalable les instants de réception de télégrammes de données à recevoir pendant les premiers cycles de transmission et que la liste d'émission est conçue de telle sorte qu'elle fixe au préalable les instants d'émission de télégrammes de données à émettre pendant les deuxièmes cycles de transmission.

2. Circuit électronique selon la revendication 1, avec une technique de connexion uniforme pour au moins une ou plusieurs interfaces de communication (103) pour la connexion de moyens de câblage uniformes.

3. Circuit électronique selon la revendication 1 ou 2, avec une fonctionnalité d'acheminement entre des interfaces de communication (103).

4. Circuit électronique selon l'une des revendications précédentes 1 à 3, la première liaison de communication (16) et la deuxième liaison de communication (12) ayant des débits de transmission différents.

5. Circuit électronique selon l'une des revendications précédentes 1 à 4, dans lequel la liste d'émission (4, 6, 14, 18) est conçue pour m émissions d'un télégramme de données (20 à 28) à l'intérieur de m cycles de transmission successifs (13, 17) après que le télégramme de données (20 à 28) a été reçu n fois à l'intérieur du premier cycle de transmission (17) selon la liste de réception (5, 7, 15, 19).

6. Circuit électronique selon la revendication 5, dans lequel m > n, dans la mesure où n ≥ 1.

7. Circuit électronique selon la revendication 6, conçu de telle sorte que le télégramme de données (20 à 28) n'est émis qu'une fois selon la liste d'émission (4, 6, 14, 18) et que, en plus, m - 1 télégrammes de données de remplacement sont émis selon la liste d'émission (4, 6, 14, 18) dans le deuxième cycle de transmission (13).

8. Circuit électronique selon l'une des revendications précédentes 1 à 7, dans lequel la première liaison de communication (16) et/ou la deuxième liaison de communication (12) sont bidirectionnelles et dans lequel, à chaque fois, une liste d'émission (4, 6, 14, 18) et une liste de réception (5, 7, 15, 19) sont associées à chacune des liaisons de communication bidirectionnelles.

9. Circuit électronique selon l'une des revendications précédentes 1 à 8, dans lequel le télégramme de données 30 (20 à 28) correspond à des données en temps réel.

10. Circuit électronique selon l'une des revendications précédentes 1 à 9, dans lequel la première liaison de communication (16) et la deuxième liaison de communication (12) correspondent à un Ethernet industriel, notamment à un Isochronous Realtime Ethernet IRTE ou à un Soft Realtime Ethernet SRTE.

11. Circuit électronique selon l'une des revendications précédentes 1 à 10, avec plusieurs ports d'entrée et/ou plusieurs ports de sortie auxquels sont associées à chaque fois une liste de réception (5, 7, 15, 19) et/ou une liste d'émission (4, 6, 14, 18) et avec un réseau de connexion (29) pour la connexion d'au moins l'un des ports à l'un ou plusieurs des autres ports.

12. Système d'automatisation avec plusieurs composants (41, 42, 43, 44, 45) qui sont reliés entre eux par des liaisons de communication (46, 47, 48, 49), dans lequel chacun des composants (41 à 45) comporte un circuit électronique selon l'une des revendications précédentes 1 à 11 comme partie intégrante ou comme partie accessoire.

13. Système d'automatisation avec au moins un premier sous-réseau (50, 51, 52, 53) avec des premières liaisons de communication et avec au moins un deuxième sous-réseau (50, 51, 52, 53) avec des deuxièmes liaisons de communication et avec au moins un noeud de connexion (54, 55, 56) entre les premiers et les deuxièmes sous-réseaux (50 à 53) avec un circuit électronique selon l'une des revendications précédentes 1 à 11.

14. Système d'automatisation selon la revendication 13 avec plusieurs noeuds de connexion (54 à 59) qui sont reliés entre eux par un troisième sous-réseau (50).

15. Système d'automatisation selon la revendication 13 ou 14, dans lequel les différents sous-réseaux (50 à 53) ont des cycles de transmission différents et/ou des débits de transmission différents.

16. Procédé pour exploiter une interface de communication (103) entre une première liaison de communication cadencée en cycles (16) avec un premier cycle de transmission (17) d'une première longueur et une deuxième liaison de communication cadencée en cycles (12) avec un deuxième cycle de transmission (13) d'une deuxième longueur, le premier cycle de transmission (17) et le deuxième cycle de transmission (13) étant synchrones et les longueurs du premier cycle de transmission (17) et du deuxième cycle de transmission (13) étant égales de préférence ou l'une étant un multiple entier de l'autre, avec les étapes suivantes :
- réception d'un télégramme de données (20 à 28) selon une liste de réception (5, 7, 15, 19) associée au premier cycle de transmission (17), la liste de réception déterminant au préalable les instants de réception de télégrammes de données à recevoir pendant les premiers cycles de transmission, et
- émission du télégramme de données (20 à 28) selon une liste d'émission (4, 6, 14, 18) associée au deuxième cycle de transmission (13), la liste d'émission déterminant au préalable les instants d'émission de télégrammes de données à émettre pendant les deuxièmes cycles de transmission.

17. Procédé selon la revendication 16, dans lequel la première liaison de communication (16) et la deuxième liaison de communication (12) ont des débits de transmission différents.

18. Procédé selon la revendication 16 ou 17, dans lequel un télégramme de données (20 à 28) est reçu par un premier utilisateur de la première liaison de communication (16) à l'intérieur du premier cycle de transmission (17) et le télégramme de données (20 à 28) est envoyé m fois à l'intérieur de m cycles de transmission successifs (17, 13) à un deuxième utilisateur de la deuxième liaison de communication (12).

19. Procédé selon la revendication 18, dans lequel le télégramme de données (20 à 28) n'est envoyé qu'une fois dans le deuxième cycle de transmission (13, 17) et un télégramme de données de remplacement est envoyé m - 1 fois dans des deuxièmes cycles de transmission (13, 17) suivants.

20. Procédé selon l'une des revendications précédentes 16 à 19, dans lequel le télégramme de données (20 à 28) correspond à des données en temps réel.

21. Procédé selon l'une des revendications précédentes 16 à 20, dans lequel un échange cyclique de données s'effectue par l'intermédiaire de la première liaison de communication (16) et de la deuxième liaison de communication (12) dans des cycles de communication équidistants qui sont prédéterminés par l'horloge de communication utilisée par le système.

22. Procédé selon l'une des revendications précédentes 16 à 21, dans lequel la première liaison de communication (16) et la deuxième liaison de communication (12) correspondent à chaque fois à un Ethernet industriel, notamment à un Isochronous Realtime Ethernet IRTE ou à un Soft Realtime Ethernet SRTE.

23. Procédé selon l'une des revendications précédentes 16 à 22, dans lequel un ou plusieurs ports d'entrée et/ou un ou plusieurs ports de sortie auxquels sont associées à chaque fois une liste de réception (5, 7, 15, 19) et/ou une liste d'émission (4, 6, 14, 18) sont connectés par l'intermédiaire d'un réseau de connexion (29).

24. Procédé selon l'une des revendications précédentes 16 à 23, dans lequel le premier cycle de transmission (17) et le deuxième cycle de transmission (13) ne présentent pas de déphasage.

25. Produit formant programme informatique avec des moyens de programme pour la mise en oeuvre d'un procédé selon l'une des revendications précédentes 16 à 24, les moyens de programme étant réalisés sur un circuit électronique ou sur un système d'automatisation.
